# EUROPEAN PATENT SPECIFICATION

(11) **EP 4 388 879 B1**
(45) Date of publication and mention of the grant of the patent: **27.05.2026**
(21) Application number: 23000181.0
(22) Date of filing: 22.12.2023
(51) Int. Cl.: A21C 3/02, A21C 11/04

(54) **MACHINE AND ROLLER FOR FORMING A SHEET OF FRESH PASTA**
MASCHINE UND ROLLE ZUR FORMUNG EINES BLATTES AUS FRISCHEN TEIGWAREN
MACHINE ET ROULEAU POUR FORMER UNE FEUILLE DE PÂTE FRAÎCHE

(30) Priority: 22.12.2022 IT 202200026625
(43) Date of publication of application: 26.06.2024
(73) Proprietor: Imperia & Monferrina S.p.A., 00198 Roma (IT)
(72) Inventor: Ancona, Enrico, I-10098 Rivoli (TO) (IT); Zenato, Alessandro, I-14019 Villanova D'Asti (AT) (IT)
(74) Representative: Aprà, Mario

(56) References cited:
- EP-B1- 0 763 978
- DD-A1- 266 022
- FR-A1- 2 008 666
- IT-A1- PD 970 079
- JP-U- H0 744 466
- JP-U- S5 411 990
- JP-U- S59 161 979
- US-A1- 2022 001 635

## Description

The present invention relates to a machine for forming a sheet of fresh pasta, known as dough sheeter machine. The invention also relates to a sheeter roller of a dough sheeter machine.

The document EP 0763 978 B1 discloses a machine for forming a sheet of fresh pasta, comprising:
- a supporting structure, supporting two cylindrical sheeter rollers,
   - wherein said two sheeter rollers are configured to form, from a shapable food dough, a sheet of fresh pasta and have respective horizontal axes parallel and respective outer cylindrical lateral surfaces partly smooth and opposite each other and spaced by means of a continuous gap;
- rotation control means of said two rollers,
   - wherein said rotation control means are configured to determine the simultaneous rotation of said two sheeter rollers in mutually opposite directions of rotation,
- wherein one roller of said two sheeter rollers comprises a first cylindrical helical slot provided in at least one part of the outer lateral surface and coaxial with respect to the axis of said roller,
- wherein said first cylindrical helical slot is shaped so as to provide, in said at least one part of the outer lateral surface of said roller, a plurality of contiguous grooves, which are arranged according to respective planes inclined with respect to a plane orthogonal to the axis of said roller and each having, in the axial direction of said roller, a width less than the width of a respective part of the smooth outer lateral surface of said roller comprised between two contiguous grooves of said first cylindrical helical slot,
- wherein said roller is configured, by means of said first cylindrical helical slot, as sheeter and corrugator roller of a corresponding part of a surface of the sheet of pasta, and
- wherein, during forming of the sheet of pasta, said roller cuts, in said corresponding part of a surface of the sheet of pasta, a plurality of linear slots according to a continuous and regular surface pattern.

A machine for forming a sheet of fresh pasta similar to the one described above is also disclosed in the following documents: JP S54 11990 U, JP S59 161979 U, JP 4 553980 B1.

The sheet thus formed is then subjected to a cutting operation, for example in another machine, by means of suitable cutting means, to form, for example, strips of pasta, such as tagliatelle or noodles. The strips of pasta cut from the sheet also have at least one part of surface provided with lengths of linear slots.

The fresh pasta thus formed lends itself well to cooking, but its surface shape is not particularly suitable for retaining the sauce with which the pasta is dressed after being cooked.

In particular, the strips of fresh pasta, cut from a sheet with at least one surface having a plurality of linear slots according to a continuous and regular surface pattern, substantially have alternating troughs and crests configured as micro-channels open at the ends of each strip, along which a significant part of the sauce, when added to the pasta after cooking, drains without being retained, as would instead be desirable.

The invention is a sheeter roller according to claim 1.

An object of the present invention is to provide a machine for forming a sheet of fresh pasta that allows pasta formats more suitable for retaining the sauce, with which the pasta is dressed after being cooked, to be obtained from this sheet.

Another object of the present invention is to provide a sheeter roller of a machine for forming a sheet of fresh pasta that allows pasta formats more suitable for retaining the sauce, with which the pasta is dressed after being cooked, to be obtained from this sheet.

Other advantageous features of the present invention are described in the dependent claims.

Further features and advantages of the invention will be apparent from the following detailed description of an example of embodiment, with reference to the drawing which shows details important for the invention, and to the claims. The features illustrated herein must not necessarily be considered to scale and are represented in such a manner that the specific characteristics according to the invention are clearly highlighted.

In the accompanying drawing:

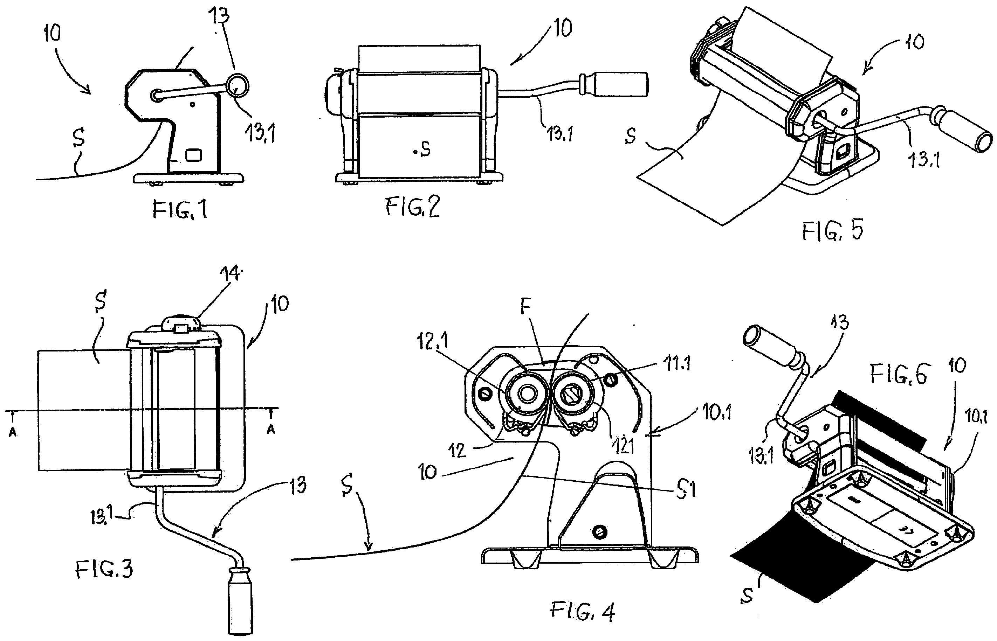

- Fig. 1 is a side elevation view of the machine for forming a sheet of fresh pasta, in particular for household use, according to an example of embodiment of the present invention, wherein said machine is illustrated in the step of forming a sheet of fresh pasta;
- Fig. 2 is a front elevation view of the machine of Fig. 1;
- Fig. 3 is a top plan view of the machine of Fig. 1;
- Fig. 4 is a view in an enlarged scale and in a section along the line A-A of Fig. 3;
- Fig. 5 is a three-quarter perspective view of the machine of Fig. 1 from above;
- Fig. 6 is a three-quarter perspective view of the machine of Fig. 1 from below;

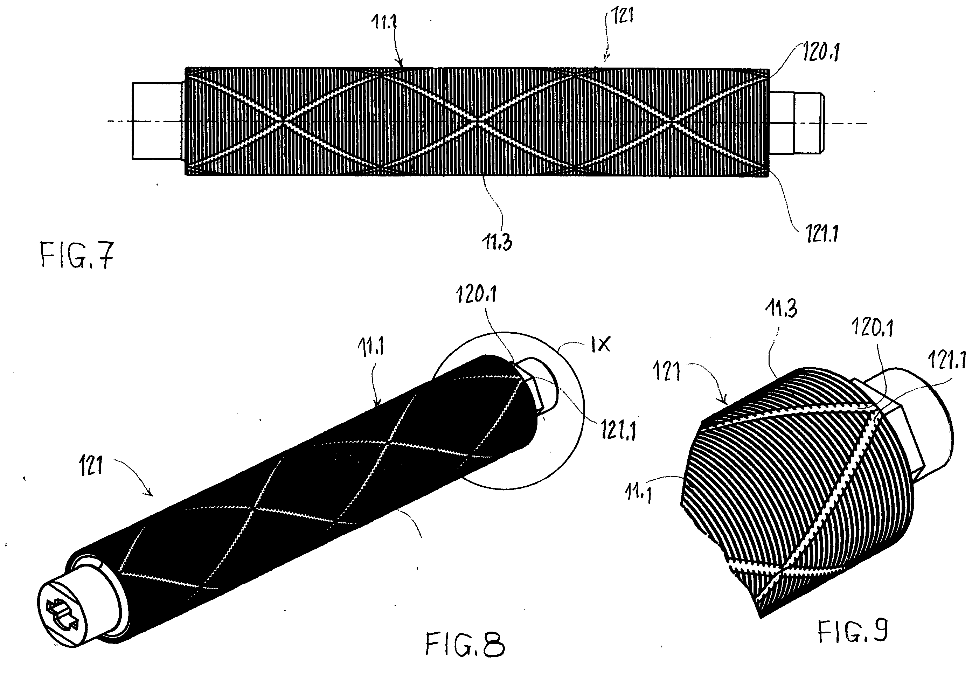

- Fig. 7 is an elevation view in an enlarged scale of a sheeter roller of the machine of Fig. 1, removed from the machine;
- Fig. 8 is a perspective view of the sheeter roller of Fig. 7;
- Fig. 9 is a view in an enlarged scale of the detail IX of Fig. 8.

The present example of embodiment is described with reference to a machine for forming a sheet of fresh pasta destined for use, in particular, in a domestic environment, although the invention is not limited to a machine of the type specified for domestic use.

With reference to the drawing, the reference number 10 indicates, as a whole, a machine for forming a sheet of fresh pasta, indicated with S.

Said machine 10 is a table-top machine and comprises:
- a supporting structure 10.1, supporting two cylindrical sheeter rollers 121; 12,
   - wherein said two sheeter rollers 121; 12 are configured to form, from a shapable food dough, the sheet S of fresh pasta and have respective horizontal axes parallel and respective outer cylindrical lateral surfaces 11.1, 12.1 at least partly smooth and mutually opposite and spaced by means of a continuous gap (F);
- rotation control means 13, 13.1 of said two sheeter rollers 121; 12.

Said rotation control means 13, 13.1 are configured to determine the simultaneous rotation of said two sheeter rollers 121; 12 in mutually opposite directions of rotation.

One roller 121 of said two sheeter rollers comprises a first cylindrical helical slot 11.3, provided in at least one part of the outer lateral surface 11.1 and coaxial with respect to the axis of said roller 121.

According to the invention:
- said first cylindrical helical slot 11.3 is shaped so as to provide, in said at least one part of the outer lateral surface 11.1 of said roller 121, a plurality of contiguous grooves, which are arranged according to respective planes inclined with respect to a plane orthogonal to the axis said roller 121 and each having, in the axial direction of said roller 121, a width less than the width of a respective part of the smooth outer lateral surface 11.1 of said roller 121 comprised between two contiguous grooves of said first cylindrical helical slot 11.3,
- said roller 121 is configured, by means of said first cylindrical helical slot 11.3, as sheeter and corrugator roller of a corresponding part of a surface of the sheet of pasta S, and
- during forming of the sheet of pasta S, said roller 121 cuts, in said corresponding part of a surface of the sheet of pasta S, a plurality of linear slots according to a continuous and regular surface pattern.

According to the invention, said roller 121 comprises, in said at least one part of the outer lateral surface 11.1, a second cylindrical helical slot 120.1 and a third cylindrical helical slot 121.1.

According to the invention:
- said second cylindrical helical slot 120.1 and said third cylindrical helical slot 121.1 form respective cylindrical helices, both having a pitch of the helix between adjacent turns greater than the pitch of the helix between adjacent turns of said first cylindrical helical slot 11.3,
- said second cylindrical helical slot 120.1 and said third cylindrical helical slot 121.1 have mutually opposite directions of rotation and intersect each other and intersect said first slot 11.3, in a plurality of zones of the outer lateral surface 11.1 of said roller 121.

It must be pointed out that said second cylindrical helical slot 120.1 and said third cylindrical helical slot 121.1 are configured to cut - during forming of the sheet of pasta S -, in said corresponding part of a surface of the sheet of pasta S having said continuous and regular surface pattern, respective slots having a different arrangement and course with respect to the linear slots of said pattern, and to produce, in combination with this pattern, an uneven arrangement of troughs and crests, making said corresponding part of a surface of the sheet of pasta S irregularly rough on the whole of its extension. Moreover, said sheeter roller 121 comprises said second cylindrical helical slot 120.1 and said third cylindrical helical slot 121.1 having, respectively, a width greater than the width of said first cylindrical helical slot 11.3, said widths being considered in the axial direction of said at least one roller 121. The present invention also relates to a sheeter roller 121 of the machine 10 for forming a sheet of fresh pasta S.

Said sheeter roller 121 has, in part, a smooth outer cylindrical lateral surface 11.1 and comprises a first cylindrical helical slot 11.3, provided in at least one part of said outer lateral surface 11.1 and coaxial with respect to the axis of said roller 121.

Said first cylindrical helical slot 11.3 is shaped so as to provide in said at least one part of the outer lateral surface 11.1 of said roller 121, a plurality of contiguous grooves, which are arranged according to respective planes inclined with respect to a plane orthogonal to the axis of said roller 121 and each having, in the axial direction of said roller 121, a width less than the width of a respective part of the smooth outer lateral surface 11.1 of said roller 121 comprised between two contiguous grooves of said first cylindrical helical slot 11.3.

Said roller 121 is configured, by means of said first cylindrical helical slot 11.3, as sheeter and corrugator roller of a corresponding part of a surface of the sheet of pasta S and, during forming of the sheet of pasta S, said roller 121 cuts, in said corresponding part of a surface of the sheet of pasta S, a plurality of linear slots according to a continuous and regular surface pattern. According to the invention, said roller 121 comprises, in said at least one part of the outer lateral surface 11.1, a second cylindrical helical slot 120.1 and a third cylindrical helical slot 121.1.

According to the invention, said second cylindrical helical slot 120.1 and said third cylindrical helical slot 121.1 form respective cylindrical helices, both having a pitch of the helix between adjacent turns greater than the pitch of the helix between adjacent turns of said first cylindrical helical slot 11.3.

Moreover, said second cylindrical helical slot 120.1 and said third cylindrical helical slot 121.1 have mutually opposite directions of rotation and intersect each other and intersect said first slot 11.3.

According to the invention, said second cylindrical helical slot 120.1 and said third cylindrical helical slot 121.1 are configured to cut - during forming of the sheet of pasta S -, in said corresponding part of a surface of the sheet of pasta S having said continuous and regular surface pattern, respective slots having a different arrangement and course with respect to the linear slots of said pattern, and to produce, in combination with this pattern, an uneven arrangement of troughs and crests, making said corresponding part of a surface of the sheet of pasta S irregularly rough on the whole of its extension. From the above, the inventive idea described herein consists in forming, in the sheet of pasta processed in the dough sheeter machine, simultaneously, a pattern of first slots, as known from the prior art, and at least one second pattern of further slots, which do not follow the trend of said first slots and, hence, make said first pattern irregular and form, in the processed surface of the sheet of pasta and in combination with said first pattern, an uneven arrangement of troughs and crests, which make the processed surface of the sheet of pasta S irregularly rough on the whole of its extension.

## Claims

1. Sheeter roller (121) for a machine (10) for forming a sheet of fresh pasta, said machine comprising:
- a supporting structure (10.1), supporting at least two cylindrical sheeter rollers (121; 12),
- wherein said at least two sheeter rollers (121; 12) are configured to form, from a shapable food dough, a sheet (S) of fresh pasta and have respective horizontal axes parallel and respective outer cylindrical lateral surfaces (11.1, 12.1) at least partly smooth and mutually opposite and spaced by means of a continuous gap (F); - rotation control means (13) of said at least two sheeter rollers (121; 12),
- wherein said rotation control means (13) are configured to determine the simultaneous rotation of said at least two sheeter rollers (121; 12) in mutually opposite directions of rotation,
wherein said sheeter roller has in part, a smooth outer cylindrical lateral surface (11.1) and comprising a first cylindrical helical slot (11.3), provided in at least one part of said outer lateral surface (11.1) and coaxial with respect to the axis of said roller (121), wherein said first cylindrical helical slot (11.3) is shaped so as to provide, in said at least one part of the outer lateral surface (11.1) of said roller (121), a plurality of contiguous grooves, which are arranged according to respective planes inclined with respect to a plane orthogonal to the axis of said roller (121) and each having, in the axial direction of said roller (121), a width less than the width of a respective part of the smooth outer lateral surface (11.1) of said roller (121) comprised between two contiguous grooves of said first cylindrical helical slot (11.3), wherein said roller (121) is configured, by means of said first cylindrical helical slot (11.3), as sheeter and corrugator roller of a corresponding part of a surface of the sheet of pasta (S), and wherein, during forming of the sheet of pasta (S), said roller (121) cuts, in said corresponding part of a surface of the sheet of pasta (S), a plurality of linear slots according to a continuous and regular surface pattern, **characterized in that** said roller (121) comprises, in said at least one part of the outer lateral surface (11.1), a second cylindrical helical slot (120.1) and a third cylindrical helical slot (121.1),
- wherein said second cylindrical helical slot (120.1) and said third cylindrical helical slot (121.1) respectively form cylindrical helices, both having a pitch of the helix between adjacent turns greater than the pitch of the helix between adjacent turns of said first cylindrical helical slot (11.3),
- wherein said second cylindrical helical slot (120.1) and said third cylindrical helical slot (121.1) have mutually opposite directions of rotation and intersect each other and intersect said first slot (11.3), in a plurality of zones of the outer lateral surface (11.1) of said roller (121), and
- wherein said second cylindrical helical slot (120.1) and said third cylindrical helical slot (121.1) are configured to cut - during forming of the sheet of pasta (S) -, in said corresponding part of a surface of the sheet of pasta (S) having said continuous and regular surface pattern, respective slots having different arrangement and course with respect to the slots of said pattern, and to produce, in combination with this pattern, an uneven arrangement of troughs and crests, making said corresponding part of a surface of the sheet of pasta (S) irregularly rough on the whole of its extension.

2. Sheeter roller (121) according to claim 1, **characterized in that** said second cylindrical helical slot (120.1) and said third cylindrical helical slot (121.1) have, respectively, a width greater than the width of said first cylindrical helical slot (11.3), said widths being considered in the axial direction of said at least one roller (121).

3. Machine (10) for forming a sheet of fresh pasta, comprising:
- a supporting structure (10.1), supporting at least two cylindrical sheeter rollers (121; 12),
- wherein said at least two sheeter rollers (121; 12) are configured to form, from a shapable food dough, a sheet (S) of fresh pasta and have respective horizontal axes parallel and respective outer cylindrical lateral surfaces (11.1, 12.1) at least partly smooth and mutually opposite and spaced by means of a continuous gap (F);
- rotation control means (13) of said at least two sheeter rollers (121; 12),
- wherein said rotation control means (13) are configured to determine the simultaneous rotation of said at least two sheeter rollers (121; 12) in mutually opposite directions of rotation,
- wherein at least one roller (121) of said at least two sheeter rollers (121; 12) is a sheeter roller according to claim 1.

4. Machine (10) according to claim 3, **characterized in that** said sheeter roller (121) comprises said second cylindrical helical slot (120.1) and said third cylindrical helical slot (121.1) having, respectively a width greater than the width of said first cylindrical helical slot (11.3), said widths being considered in the axial direction of said at least one roller (121).

## Patentansprüche

1. Walzrolle (121) für eine Maschine (10) zum Formen eines Blattes frischer Pasta, wobei die Maschine umfasst:
• eine Tragstruktur (10.1), die mindestens zwei zylindrische Walzrollen (121; 12) trägt,
• wobei die genannten mindestens zwei Walzrollen (121; 12) dazu eingerichtet sind, aus einem formbaren Lebensmittelteig ein Blatt (S) frischer Pasta zu bilden und jeweilige parallele horizontale Achsen sowie jeweilige äußere zylindrische Mantelflächen (11.1, 12.1) aufweisen, die zumindest teilweise glatt und einander gegenüberliegend sowie mittels eines kontinuierlichen Spalts (F) voneinander beabstandet sind;
• Drehsteuerungsmittel (13) der genannten mindestens zwei Walzrollen (121; 12),
• wobei die genannten Drehsteuerungsmittel (13) dazu eingerichtet sind, die gleichzeitige Drehung der genannten mindestens zwei Walzrollen (121; 12) in einander entgegengesetzten Drehrichtungen zu bestimmen,
wobei die genannte Walzrolle teilweise eine glatte äußere zylindrische Mantelfläche (11.1) aufweist und eine erste zylindrische helikale Nut (11.3) umfasst, die in mindestens einem Teil der genannten äußeren Mantelfläche (11.1) vorgesehen und koaxial zur Achse der genannten Rolle (121) ist, wobei die genannte erste zylindrische helikale Nut (11.3) so gestaltet ist, dass sie in dem genannten mindestens einen Teil der äußeren Mantelfläche (11.1) der genannten Rolle (121) eine Vielzahl zusammenhängender Nuten bereitstellt, die gemäß jeweiligen Ebenen angeordnet sind, die gegenüber einer zur Achse der genannten Rolle (121) orthogonalen Ebene geneigt sind, und jeweils in axialer Richtung der genannten Rolle (121) eine Breite aufweisen, die kleiner ist als die Breite eines jeweiligen Teils der glatten äußeren Mantelfläche (11.1) der genannten Rolle (121), der zwischen zwei zusammenhängenden Nuten der genannten ersten zylindrischen helikalen Nut (11.3) liegt, wobei die genannte Rolle (121) mittels der genannten ersten zylindrischen helikalen Nut (11.3) als Walz- und Wellrolle eines entsprechenden Teils einer Oberfläche des Pastablattes (S) ausgebildet ist, und wobei die genannte Rolle (121) während des Formens des Pastablattes (S) in dem genannten entsprechenden Teil einer Oberfläche des Pastablattes (S) eine Vielzahl linearer Schlitze gemäß einem kontinuierlichen und regelmäßigen Oberflächenmuster schneidet,
**dadurch gekennzeichnet, dass** die genannte Rolle (121) in dem genannten mindestens einen Teil der äußeren Mantelfläche (11.1) eine zweite zylindrische helikale Nut (120.1) und eine dritte zylindrische helikale Nut (121.1) umfasst,
• wobei die genannte zweite zylindrische helikale Nut (120.1) und die genannte dritte zylindrische helikale Nut (121.1) jeweils zylindrische Helices bilden, die beide eine Steigung der Helix zwischen benachbarten Windungen aufweisen, die größer ist als die Steigung der Helix zwischen benachbarten Windungen der genannten ersten zylindrischen helikalen Nut (11.3),
• wobei die genannte zweite zylindrische helikale Nut (120.1) und die genannte dritte zylindrische helikale Nut (121.1) einander entgegengesetzte Drehrichtungen aufweisen und einander schneiden sowie die genannte erste Nut (11.3) in einer Vielzahl von Bereichen der äußeren Mantelfläche (11.1) der genannten Rolle (121) schneiden, und
• wobei die genannte zweite zylindrische helikale Nut (120.1) und die genannte dritte zylindrische helikale Nut (121.1) dazu eingerichtet sind, - während des Formens des Pastablattes (S) - in dem genannten entsprechenden Teil einer Oberfläche des Pastablattes (S), der das genannte kontinuierliche und regelmäßige Oberflächenmuster aufweist, jeweilige Schlitze mit einer im Vergleich zu den Schlitzen des genannten Musters unterschiedlichen Anordnung und Verlauf zu schneiden und in Kombination mit diesem Muster eine ungleichmäßige Anordnung von Vertiefungen und Erhebungen zu erzeugen, wodurch der genannte entsprechende Teil einer Oberfläche des Pastablattes (S) über seine gesamte Ausdehnung unregelmäßig rau wird.

2. Walzrolle (121) nach Anspruch 1, **dadurch gekennzeichnet, dass** die genannte zweite zylindrische helikale Nut (120.1) und die genannte dritte zylindrische helikale Nut (121.1) jeweils eine Breite aufweisen, die größer ist als die Breite der genannten ersten zylindrischen helikalen Nut (11.3), wobei die genannten Breiten in axialer Richtung der genannten mindestens einen Rolle (121) betrachtet werden.

3. Maschine (10) zum Formen eines Blattes frischer Pasta, umfassend:
• eine Tragstruktur (10.1), die mindestens zwei zylindrische Walzrollen (121; 12) trägt,
• wobei die genannten mindestens zwei Walzrollen (121; 12) dazu eingerichtet sind, aus einem formbaren Lebensmittelteig ein Blatt (S) frischer Pasta zu bilden und jeweilige parallele horizontale Achsen sowie jeweilige äußere zylindrische Mantelflächen (11.1, 12.1) aufweisen, die zumindest teilweise glatt und einander gegenüberliegend sowie mittels eines kontinuierlichen Spalts (F) voneinander beabstandet sind;
Drehsteuerungsmittel (13) der genannten mindestens zwei Walzrollen (121; 12),
• wobei die genannten Drehsteuerungsmittel (13) dazu eingerichtet sind, die gleichzeitige Drehung der genannten mindestens zwei Walzrollen (121; 12) in einander entgegengesetzten Drehrichtungen zu bestimmen,
• wobei mindestens eine Rolle (121) der genannten mindestens zwei Walzrollen (121; 12) eine Walzrolle nach Anspruch 1 ist.

4. Maschine (10) nach Anspruch 3, **dadurch gekennzeichnet, dass** die genannte Walzrolle (121) die genannte zweite zylindrische helikale Nut (120.1) und die genannte dritte zylindrische helikale Nut (121.1) umfasst, die jeweils eine Breite aufweisen, die größer ist als die Breite der genannten ersten zylindrischen helikalen Nut (11.3), wobei die genannten Breiten in axialer Richtung der genannten mindestens einen Rolle (121) betrachtet werden.

## Revendications

1. Rouleau de laminage (121) pour une machine (10) pour former une feuille de pâte fraîche, ladite machine comprenant:
• une structure de support (10.1), supportant au moins deux rouleaux de laminage cylindriques (121 ; 12),
• dans laquelle lesdits au moins deux rouleaux de laminage (121; 12) sont configurés pour former, à partir d'une pâte alimentaire façonnable, une feuille (S) de pâte fraîche et présentent des axes horizontaux respectifs parallèles et des surfaces latérales cylindriques extérieures respectives (11.1, 12.1) au moins partiellement lisses et mutuellement opposées et espacées au moyen d'un entrefer continu (F) ;
• des moyens de commande de rotation (13) desdits au moins deux rouleaux de laminage (121 ; 12),
• dans laquelle lesdits moyens de commande de rotation (13) sont configurés pour déterminer la rotation simultanée desdits au moins deux rouleaux de laminage (121 ; 12) selon des directions de rotation mutuellement opposées,
dans lequel ledit rouleau de laminage présente, en partie, une surface latérale cylindrique extérieure lisse (11.1) et comprend une première rainure hélicoïdale cylindrique (11.3), prévue dans au moins une partie de ladite surface latérale extérieure (11.1) et coaxiale par rapport à l'axe dudit rouleau (121), dans lequel ladite première rainure hélicoïdale cylindrique (11.3) est façonnée de manière à fournir, dans ladite au moins une partie de la surface latérale extérieure (11.1) dudit rouleau (121), une pluralité de rainures contiguës, qui sont disposées selon des plans respectifs inclinés par rapport à un plan orthogonal à l'axe dudit rouleau (121) et chacune ayant, dans la direction axiale dudit rouleau (121), une largeur inférieure à la largeur d'une partie respective de la surface latérale extérieure lisse (11.1) dudit rouleau (121) comprise entre deux rainures contiguës de ladite première rainure hélicoïdale cylindrique (11.3), dans lequel ledit rouleau (121) est configuré, au moyen de ladite première rainure hélicoïdale cylindrique (11.3), comme rouleau de laminage et de cannelage d'une partie correspondante d'une surface de la feuille de pâte (S), et dans lequel, pendant la formation de la feuille de pâte (S), ledit rouleau (121) découpe, dans ladite partie correspondante d'une surface de la feuille de pâte (S), une pluralité de fentes linéaires selon un motif de surface continu et régulier,
**caractérisé en ce que** ledit rouleau (121) comprend, dans ladite au moins une partie de la surface latérale extérieure (11.1), une deuxième rainure hélicoïdale cylindrique (120.1) et une troisième rainure hélicoïdale cylindrique (121.1),
• dans lequel ladite deuxième rainure hélicoïdale cylindrique (120.1) et ladite troisième rainure hélicoïdale cylindrique (121.1) forment respectivement des hélices cylindriques, ayant toutes deux un pas de l'hélice entre spires adjacentes supérieur au pas de l'hélice entre spires adjacentes de ladite première rainure hélicoïdale cylindrique (11.3),
• dans lequel ladite deuxième rainure hélicoïdale cylindrique (120.1) et ladite troisième rainure hélicoïdale cylindrique (121.1) ont des directions de rotation mutuellement opposées et s'intersectent entre elles et intersectent ladite première rainure (11.3), en une pluralité de zones de la surface latérale extérieure (11.1) dudit rouleau (121), et
• dans lequel ladite deuxième rainure hélicoïdale cylindrique (120.1) et ladite troisième rainure hélicoïdale cylindrique (121.1) sont configurées pour découper - pendant la formation de la feuille de pâte (S) -, dans ladite partie correspondante d'une surface de la feuille de pâte (S) présentant ledit motif de surface continu et régulier, des fentes respectives ayant une disposition et un parcours différents par rapport aux fentes dudit motif, et pour produire, en combinaison avec ce motif, une disposition irrégulière de creux et de crêtes, rendant ladite partie correspondante d'une surface de la feuille de pâte (S) irrégulièrement rugueuse sur l'ensemble de son étendue.

2. Rouleau de laminage (121) selon la revendication 1, **caractérisé en ce que** ladite deuxième rainure hélicoïdale cylindrique (120.1) et ladite troisième rainure hélicoïdale cylindrique (121.1) ont, respectivement, une largeur supérieure à la largeur de ladite première rainure hélicoïdale cylindrique (11.3), lesdites largeurs étant considérées dans la direction axiale dudit au moins un rouleau (121).

3. Machine (10) pour former une feuille de pâte fraîche comprenant:
• une structure de support (10.1), supportant au moins deux rouleaux de laminage cylindriques (121; 12),
• dans laquelle lesdits au moins deux rouleaux de laminage (121; 12) sont configurés pour former, à partir d'une pâte alimentaire façonnable, une feuille (S) de pâte fraîche et présentent des axes horizontaux respectifs parallèles et des surfaces latérales cylindriques extérieures respectives (11.1, 12.1) au moins partiellement lisses et mutuellement opposées et espacées au moyen d'un entrefer continu (F);
des moyens de commande de rotation (13) desdits au moins deux rouleaux de laminage (121; 12),
• dans laquelle lesdits moyens de commande de rotation (13) sont configurés pour déterminer la rotation simultanée desdits au moins deux rouleaux de laminage (121 ; 12) selon des directions de rotation mutuellement opposées,
• dans laquelle au moins un rouleau (121) desdits au moins deux rouleaux de laminage (121 ; 12) est un rouleau de laminage selon la revendication 1.

4. Machine (10) selon la revendication 3, **caractérisée en ce que** ledit rouleau de laminage (121) comprend ladite deuxième rainure hélicoïdale cylindrique (120.1) et ladite troisième rainure hélicoïdale cylindrique (121.1) ayant, respectivement, une largeur supérieure à la largeur de ladite première rainure hélicoïdale cylindrique (11.3), lesdites largeurs étant considérées dans la direction axiale dudit au moins un rouleau (121).
